# FASCICULE DE BREVET EUROPEEN

(11) **EP 4 003 557 B1**
(45) Date de publication et mention de la délivrance du brevet: **06.11.2024**
(21) Numéro de dépôt: 20743158.6
(22) Date de dépôt: 24.07.2020
(51) Int. Cl.: A63F 13/327, A63F 13/355, A63F 13/216, A63F 13/27, A63F 13/28, A63F 13/803, H04W 4/44, G08G 1/16

(54) **SYSTÈME ET PROCÉDÉ DE CONTROLE D'UNE PLURALITÉ DE KARTS METTANT EN OEUVRE AU MOINS DEUX RESEAUX DE COMMUNICATION**
SYSTEM UND VERFAHREN ZUR STEUERUNG EINER VIELZAHL VON GOKARTS MIT MINDESTENS ZWEI KOMMUNIKATIONSNETZEN
SYSTEM AND METHOD FOR CONTROLLING A PLURALITY OF GO-KARTS USING AT LEAST TWO COMMUNICATION NETWORKS

(30) Priorité: 24.07.2019 FR 1908416
(43) Date de publication de la demande: 01.06.2022
(73) Titulaire: Sodikart, 44220 Couëron (FR)
(72) Inventeur: BAGNARIOL, Gilles, 44000 NANTES (FR)
(74) Mandataire: Vidon Brevets & Stratégie
(86) Numéro de dépôt international: PCT/EP2020/071043
(87) Numéro de publication internationale: WO 2021/014018

(56) Documents cités:
- EP-A1- 1 198 274
- EP-B1- 1 198 274
- WO-A1-2018/147668
- WO-A1-2019/010411
- CN-A- 107 770 248
- FR-A1- 3 008 944
- GB-A- 2 516 629
- US-A1- 2006 223 637
- US-A1- 2019 105 572
- US-A1- 2019 282 908

## Description

### 1. Domaine de l'invention

Le domaine de l'invention est celui du karting, et plus précisément de la pratique ludique, ou « enrichie », par rapport à la pratique habituelle.

### 2. Art antérieur

La pratique du karting existe depuis plusieurs dizaines d'années. Un kart est un véhicule très simple, reposant généralement sur un châssis tubulaire sans suspension, portant essentiellement une motorisation, un siège pour le pilote, un volant pour contrôler la direction, et un pédalier, comprenant une pédale d'accélération et une pédale de freinage. La motorisation peut notamment être thermique ou électrique.

La pratique du karting se fait sur une piste, en extérieur (« outdoor ») ou, selon une approche qui s'est fortement développée, en intérieur (« indoor »).

On peut distinguer le karting de compétition et le karting de loisir, qui se fait le plus souvent par location de karts (par exemple pour une série de tours sur une durée de 10 ou 15 minutes), ou sous forme d'animations, par exemple sur une demi-journée ou une soirée, pouvant regrouper un ensemble d'amis, de collègues de bureau...

Généralement, le karting se pratique sous la forme d'une une plusieurs courses, sur la piste de karting. Les utilisateurs, ou pilotes, conduisent chacun un kart, et font la course, généralement pendant plusieurs tours de piste, l'objectif étant bien sûr pour le pilote d'être le plus rapide, et donc le premier à couper la ligne d'arrivée.

Cette approche de compétition, qu'elle soit mise en oeuvre dans le cadre d'une réelle compétition sportive sur des karts de compétition ou entre amis sur des karts de location, satisfait de nombreux pratiquants. Il existe cependant un souhait d'élargir le nombre de pratiquants et de proposer d'autres approches, en complément.

Il est connu, dans le domaine du jeu vidéo des jeux (« Mario Kart » (marque déposée) par exemple) dans lesquels les joueurs ne se limitent pas uniquement à une simulation de pilotage : ils peuvent obtenir des bonus, par exemple en roulant sur un objet apparu sur la piste, qui va leur donner un surcroît de vitesse, pendant quelque temps. Ils peuvent aussi, parfois, viser un autre kart, pour le faire ralentir ou sortir de la piste. On comprend qu'il pourrait être intéressant de proposer des enrichissements similaires dans certains cas et pour certains publics avec des karts réels, pour cumuler la réalité du pilotage avec l'aspect ludique.

La mise en oeuvre d'une telle approche n'est cependant pas aisée en pratique, et on constate au final qu'aucune solution efficace et fiable n'a pu être proposée. Le problème principal, pour l'adaptation des approches connues dans le domaine du jeu vidéo au karting réel est celui de la sécurité des pilotes, et, le cas échéant, du public. En effet, il n'est pas grave, dans une situation virtuelle, c'est-à-dire d'un jeu, que l'un des karts soit accidenté voire détruit. Au contraire, ceci fait d'ailleurs, généralement, partie du jeu et de la satisfaction des joueurs. Et ceci ne pose pas de problème, puisque le kart, ou un autre véhicule, est généralement restitué « comme neuf » au bout de quelques secondes et que, en tout état de cause, il n'y a eu aucune destruction ou atteinte réelle de matériel, ni bien entendu de mise en danger physique de pilotes. Evidemment, ceci n'est pas le cas avec des karts réels, et il est essentiel de garantir la sécurité des pilotes et du public, et, autant que faire se peut, l'intégrité des karts et de la piste. Il n'est donc pas envisageable de permettre qu'un kart sorte de la piste suite à une action ludique d'un autre pilote, ni que deux ou plusieurs karts entrent en collision parce que l'un a été forcé à ralentir et/ou que l'autre a pu fortement accélérer grâce à un effet temporaire de « boost ».

Il est donc essentiel de disposer de moyens permettant le contrôle à distance des karts, notamment pour interagir sur ceux-ci lorsqu'une situation à risque se présente.

Il est important de rappeler ici que les karts sont des véhicules qui se déplacent relativement rapidement, y compris lorsqu'il s'agit de kart de location, et qu'ils atteignent rapidement plusieurs dizaines de kilomètres/heure, par exemple 50 ou 60 km/h. Pour être significatif, un effet de « boost » devrait donc ajouter, par exemple, au moins 10 km/h, ce qui introduit un différentiel de vitesse entre les différents karts pouvant générer des situations à risque.

Par ailleurs, les karts sont des véhicules basiques, reposant sur un simple châssis, légers et relativement peu coûteux. Il n'est pas possible, bien sûr, de les équiper comme un véhicule automobile de moyens de détection anti-collision et plus généralement des techniques actuellement développées pour les futurs véhicules autonomes ou semi-autonomes. Pour autant, il serait nécessaire qu'ils disposent, à moindre coût et à poids réduit, de moyens permettant une information et une participation du pilote aux aspects ludiques, par exemple pour savoir s'il dispose une réserve d'énergie lui permettant d'actionner un effet « boost », ou s'il a été atteint par le tir (virtuel) d'un autre pilote, provoquant son ralentissement.

La mise en oeuvre de tous ces aspects est particulièrement complexe, en particulier, en prenant en compte la double considération d'une nécessité de sécurité (on comprend bien sûr, que s'il est nécessaire d'arrêter ou de ralentir un kart, il ne faut pas que le signal soit émis en retard et/ou non reçu, ou mal reçu) et d'optimisation des coûts de développement et de mise en place sur une piste de karting, qui peut être ouverte (« indoor ») ou en extérieur (« outdoor »).

On connaît également, par exemple du document WO2019010411, des techniques permettant de faire participer virtuellement des véhicules virtuels une course réelle, parmi des véhicules réels disputant cette course réelle. Mais ce document n'apporte pas de solution particulière à la sécurité de la transmission de commandes agissant sur ces véhicules réels, et en particulier sur une façon de gérer leur puissance ou d'autres éléments pouvant interagir avec le comportement du véhicule, et moins encore d'un kart, ni à la gestion de l'aspect ludique associé.

L'invention a notamment pour objectif de pallier au moins certains inconvénients.

### 3. Exposé de l'invention

Ces objectifs, ainsi que d'autres qui apparaîtront plus clairement par la suite sont atteints à l'aide d'un système de contrôle d'une pluralité de karts répartis sur une piste de karting, comprenant un serveur de contrôle et des moyens de localisation portés par chacun desdits karts et des moyens de communications permettant au serveur de communiquer avec chacun desdits karts.

Selon l'invention, ledit serveur communique avec chacun desdits karts à l'aide d'au moins deux réseaux de communication distincts, un premier réseau de gestion d'informations de sécurité, permettant de transmettre des commandes agissant sur le contrôle de la motorisation d'au moins un kart selon un premier protocole radio sécurisé, et un deuxième réseau de gestion d'informations ludiques, permettant de transmettre des données d'images vers un écran monté sur chacun desdits karts selon un deuxième protocole.

Ledit serveur comprend :
- des moyens de gestion des positions respectives de chacun des karts, fournies par lesdits moyens de localisation, et des moyens d'analyse de requêtes d'action émises par lesdits karts, comprenant au moins des requêtes d'augmentation et/ou de réduction de puissance, en fonction desdites positions respectives, aptes à valider, refuser, modifier et/ou différer l'activation desdites requêtes, en émettant des commandes correspondantes vers les karts concernés, via ledit premier réseau, et des moyens de synchronisation pilotant en fonction desdites requêtes d'action ; et
- des moyens de génération de données d'images au moins vers lesdits karts concernés, illustrant l'activation desdites requêtes d'action, via ledit second réseau.

Ainsi, selon l'invention, il est possible de proposer des améliorations, ou enrichissements, ludiques, par rapport à la pratique habituelle du karting, sans nuire à la sécurité. En effet, des moyens spécifiques, y compris un réseau dédié, sont prévus pour générer et transmettre des commandes permettant d'arrêter ou de ralentir certains karts. En parallèle, le serveur produit des images, ou des informations permettant de construire des images, qui sont restituées sur des écrans montés sur les karts. La transmission est assurée par un deuxième réseau qui ne perturbe pas la transmission des informations de sécurité.

Il est à noter que, pour une mise en oeuvre ludique, mais également sportive, les variations de vitesse doivent de préférence être significatives (au minimum 10 km/h). Ceci impose une mise en oeuvre garantissant la sécurité des pilotes, par une analyse précise et une transmission très efficace des commandes par le premier réseau.

Selon un premier mode de réalisation particulier, lesdits moyens de localisation mettent en oeuvre un troisième réseau de communication avec ledit serveur, mettant en oeuvre une communication de type Ultra Large Bande.

Ainsi, le serveur tient compte et/ou contrôle des informations transmises via trois réseaux distincts, de façon à optimiser la sécurité des pilotes, en disposant d'une part d'une localisation précise, via le troisième réseau, et d'un contrôle efficace des karts à distance, via le deuxième réseau. La distinction entre les différents réseaux permet d'optimiser le traitement de chaque type d'information, et d'éviter des anomalies de transmission.

Selon une mise en oeuvre particulière, ledit premier protocole met en oeuvre une communication sur une première fréquence de la bande ISM.

Dans ce cas, selon un mode de réalisation, lesdites requêtes d'action peuvent être transmises via ledit premier réseau permet également la transmission, sur une deuxième fréquence de la bande ISM.

Selon un mode de réalisation particulier, ledit deuxième protocole est un protocole Wifi.

Ce réseau wifi permet une transmission simple et efficace, qui est bien adaptée aux écrans équipant les karts.

Lesdites données d'images peuvent notamment être restituées sur un écran monté sur le volant, par exemple un écran amovible, sous la forme d'un téléphone mobile intelligent.

Ceci permet une implantation particulièrement simple et efficace. Les téléphones intelligents (« smartphones » en anglais) sont peu coûteux et adapté à une communication wifi. Il est par ailleurs aisé de retirer de tels téléphones du volant, et de les mettre en charge. Il peut également s'agir de tablettes, ou de moyens similaires.

Selon un mode de réalisation particulier, ledit serveur comprend des moyens de génération d'effets spéciaux, contrôlant des moyens lumineux et/ou sonores prévus à cet effet sur ladite piste de karting, pour simuler l'activation desdites requêtes.

Le serveur assure ainsi, de façon synchronisée avec les commandes, des effets spéciaux, qui peuvent notamment être actionnés via des données délivrées par le deuxième réseau.

Selon un mode de réalisation particulier, lesdites requêtes comprennent d'une part des requêtes d'augmentation temporaire de la puissance du kart émetteur de la requête et d'autre part des requêtes de réduction temporaire de la puissance d'un kart voisin du kart émetteur, transmise via ledit premier réseau.

Les requêtes générées par les karts sont ainsi transmises via le réseau réservé à la sécurité. En effet, de telles requêtes, qu'il s'agisse de requêtes d'augmentation temporaire de la puissance, pour le kart émetteur ou de requête de limitation temporaire de la puissance, pour un kart concurrent, impliquent des considérations de sécurité, puisque la mise en oeuvre de celles-ci va influer sur le comportement des karts sur la piste.

Dans ce cas, lesdits moyens d'analyse peuvent notamment valider, refuser, modifier et/ou différer l'activation d'une requête en fonction d'une pluralité de critères comprenant :
- la position dudit kart émetteur et/ou dudit kart voisin sur ladite piste, de façon à éviter notamment une modification de puissance dans une zone dangereuse de ladite piste ;
- la position dudit kart émetteur et/ou dudit kart voisin par rapport à l'ensemble des karts à proximité ;
- l'orientation, la vitesse et/ou l'accélération dudit kart émetteur et/ou dudit kart voisin par rapport à ladite piste ;
- l'orientation, la vitesse et/ou l'accélération dudit kart émetteur et/ou dudit kart voisin par rapport à l'ensemble des karts à proximité ;
- des informations sur la possibilité d'activer ladite requête, en fonction d'un ensemble de règles permettant de charger un compteur de disponibilité.

Ces différentes informations peuvent par exemple se présenter sous la forme de vecteurs à plusieurs dimensions. L'analyse de tels vecteurs peut mettre en oeuvre des comparaisons, des corrélations, des systèmes d'équations... aptes à fournir des décisions efficaces en matière de sécurité.

Le système peut en outre tenir compte également d'orientation, vitesse et/ou d'accélération de référence, préenregistrées par ledit serveur.

Ainsi, le traitement ne tient pas compte uniquement des différents karts présents sur la piste, mais également d'informations de référence, correspondant par exemple à un kart de référence, permettant au serveur de comparer la situation d'un kart réel avec une référence, en sachant ce qui est possible, raisonnable et/ou impossible, par exemple une vitesse maximale dans un virage.

Selon un aspect particulier, lesdites requêtes de réduction temporaire de la puissance d'un kart voisin du kart émetteur peuvent notamment correspondre à l'envoi d'un missile fictif par le kart émetteur, dont l'envoi et/ou l'impact sont illustrés par lesdits moyens de génération d'effets spéciaux.

L'un des aspects ludiques permis par l'invention est en effet de simuler des tirs (ou l'envoi d'un effet spécial ou d'un « sort », inclus ici dans le terme « missile ») vers un autre kart. Ceci conduit, en cas de succès, à un effet de ralentissement (et/ou d'une autre perturbation) sur le kart visé. Ce succès est restitué par l'effet appliqué au kart touché, mais également par des effets spéciaux, permettant aux spectateurs de constater cet effet.

Des informations correspondantes peuvent également être transmises, via le deuxième réseau, sur l'écran du kart touché, pour indiquer par exemple l'impact, le temps restant de l'effet et/ou l'identification du tireur..., et/ou sur l'écran du kart tireur, pour indiquer par exemple le succès du tir et/ou la quantité de munitions restantes... Des informations correspondantes peuvent également être diffusées vers d'autres karts, par exemple pour signaler que l'un des karts voisins va accélérer ou ralentir.

Selon une première mise en oeuvre, ledit serveur applique ledit impact au kart précédent le kart émetteur le plus proche.

Dans ce cas, les tirs sont validés automatiquement, même si le kart visé (en pratique, le kart le plus proche), se déplace et/ou n'est pas dans la trajectoire. Le missile se comporte comme un missile « à tête chercheuse ». C'est le serveur qui détermine le kart visé, en tenant compte des distances respectives entre les karts.

Selon une autre mise en oeuvre, ledit serveur détermine une trajectoire dudit missile fictif en fonction de la position et de l'orientation dudit kart émetteur et un l'existence ou non d'un impact sur un kart précédent ledit kart émetteur, en fonction de la position, l'orientation, la vitesse et/ou la distance dudit kart précédent.

Selon cette variante, le serveur calcule une direction pour le tir, et détermine si le tir est ou non efficace. Il peut notamment mettre en oeuvre une détermination d'un vecteur de tir.

Dans un mode de réalisation, ledit kart émetteur comprend en outre des moyens de modification de l'orientation d'un tir de missile, par rapport à l'orientation dudit kart émetteur (c'est-à-dire qu'il ne vise pas systématiquement droit devant lui).

Il est ainsi possible de diriger le tir vers un kart visé, indépendamment de l'orientation du kart.

Ceci est notamment bien adapté au cas d'un kart biplace, le tireur pouvant être le passager, distinct du pilote. Ainsi, lorsque ledit kart émetteur est un kart biplace, embarquant un pilote et un passager, lesdits moyens de modification de l'orientation d'un tir de missile peuvent être manipulés par ledit passager.

Le tireur peut également être présent sur le kart virtuellement, et agir depuis un poste comprenant un écran et des moyens de tir, interagissant avec le serveur. Plus généralement, des intervenants, notamment des coéquipiers ou des adversaires, peuvent intervenir en dehors des karts, depuis des postes fixes avec écran restituant la vue depuis un kart.

Dans une mise en oeuvre particulière, ledit impact varie en intensité selon un nombre de requêtes successives générées par ledit kart émetteur dans un laps de temps prédéterminé.

Par exemple, le serveur peut commander un ralentissement progressif du kart : chaque fois que le kart est touché, sa vitesse ralentit un peu. Il faut donc répéter les tirs pour le faire ralentir de manière conséquente.

Selon un deuxième mode de réalisation particulier, le pilote d'au moins un desdits karts est équipés de moyens de réalité virtuelle (lunettes, casque...), alimentés via ledit deuxième réseau de gestion d'informations ludiques.

Selon cette variante, il est prévu que les pilotes (ou au moins certains d'entre eux) ne voient pas la réalité de la piste, mais une situation virtuelle, tant en ce qui concerne l'environnement (piste, environnement, effets spéciaux...) et les autres karts (qui peuvent être par exemple être représentés par une monoplace, un vaisseau spatial, ou tout autre type de véhicule...). Il est possible que les environnements restitués soient différents selon les choix des pilotes.

Dans ce mode de réalisation, le pilote ne voit pas la piste, mais une version virtuelle de celle-ci. La piste peut donc être virtuelle (ce qui permet de la faire varier) ou réelle, au moins partiellement. Pour autant, la situation est très différente d'un jeu virtuel, d'une part parce que les karts évoluent dans un espace réel et prédéfini, et d'autre part car il est essentiel de gérer la sécurité des pilotes, en tenant en compte non seulement du déplacement du kart considéré mais également les déplacements des autres karts, pour éviter des collisions. Ceci est permis par l'utilisation d'un premier réseau, dédié à la sécurité.

Dans ce mode de réalisation notamment, il peut être prévu que lesdits moyens de réalité virtuelle comprennent des moyens de localisation du kart correspondant, coopérant avec des moyens de transmission desdites informations de localisation via ledit deuxième réseau de gestion d'informations ludiques.

Les dispositifs de réalité virtuelle peuvent en effet être équipés de moyens de localisation, permettant un traitement efficace. La localisation peut tenir compte d'une part de la localisation du kart et d'autre part de celle du dispositif, de façon à prendre en compte non seulement les caractéristiques d'évolution du kart (orientation, vitesse, accélération...), mais également la direction du regard du pilote.

Selon une caractéristique particulière, ledit serveur peut par ailleurs comprendre des moyens de construction d'une image virtuelle de ladite piste, et des moyens de transmission de ladite image virtuelle vers au moins un écran destiné à des spectateurs ou des joueurs.

Ainsi, il est possible, pour les spectateurs, de suivre la course, sur une représentation de la piste, avec représentation des effets des commandes.

Ledit serveur peut également comprendre, et/ou piloter, des moyens d'interactivité, permettant à un spectateur d'émettre des requêtes aptes à agir sur au moins un desdits karts.

Selon cette approche, un ou plusieurs spectateurs (ou un membre d'une équipe à laquelle au moins un pilote appartient) peut interagir, en octroyant des avantages ou des difficultés à un kart.

Un tel procédé peut notamment mettre en oeuvre les étapes suivantes, dans un serveur de gestion :
- détermination de la position de chacun desdits karts ;
- émission de commandes agissant sur le contrôle de la motorisation d'au moins un kart via ledit premier réseau de gestion d'informations de sécurité mettant en oeuvre un protocole radio sécurisé ;
- réception de requêtes d'action d'un desdits karts, dont au moins des requêtes d'augmentation temporaire de la puissance dudit kart et des requêtes de réduction temporaire de la puissance d'un autre kart ;
- analyse desdites requêtes en fonction desdites positions respectives, de façon à valider, refuser, modifier et/ou différer l'activation desdites requêtes ;
- émission de commandes correspondant à ladite activation validée, refusée, modifiée et/ou différée vers les karts concernés, via ledit premier réseau ;
- génération de données d'images destinées au moins aux karts concernés, illustrant l'activation desdites requêtes ;
- émission desdites données d'image via ledit second réseau, pour affichage desdites images sur ledit écran desdits karts concernés.

Notamment, ce procédé peut comprendre, en mettant en oeuvre certaines caractéristiques mentionnées précédemment, les étapes suivantes :
- détermination de la position de chacun desdits karts ;
- émission de commandes agissant sur le contrôle de la motorisation d'au moins un kart via ledit premier réseau de gestion d'informations de sécurité mettant en oeuvre un protocole radio sécurisé, sur une première fréquence de la bande ISM,
- réception de requêtes d'action d'un desdits karts dont au moins des requêtes d'augmentation temporaire de la puissance dudit kart et des requêtes de réduction temporaire de la puissance d'un autre kart, via ledit premier réseau, sur une deuxième fréquence de la bande ISM ;

- analyse desdites requêtes en fonction desdites positions respectives, de façon à valider, refuser, modifier et/ou différer l'activation desdites requêtes ;
- émission de commandes correspondant à ladite activation validée, refusée, modifiée et/ou différée vers les karts concernés, via ledit premier réseau ;
- génération de données d'images destinées à au moins lesdits karts concernés, illustrant l'activation desdites requêtes ;
- émission desdites données d'image via ledit second réseau ;
- génération d'effets spéciaux, contrôlant des moyens lumineux et/ou sonores prévus à cet effet sur ladite piste de karting, pour simuler l'activation desdites requêtes ;
- synchronisation, en fonction desdites activations validées, refusées, modifiées et/ou différées, desdites étapes d'émission de données d'images et de génération d'effets spéciaux.

Selon cette approche, on dispose d'une gestion enrichie, notamment ludique, de la mise en oeuvre des karts sur la piste, tout en garantissant la sécurité des karts et de leurs pilotes.

### 4. Exposé des figures

D'autres caractéristiques de l'invention apparaîtront plus clairement à la lecture de la description suivante de modes de réalisation préférentiels de l'invention, donnés à titre de simples exemples illustratifs et non limitatifs, et des figures annexées, parmi lesquelles :
[Fig 1] est une vue schématique des réseaux de communication et d'échanges de données mis en oeuvre selon une première approche de l'invention ;
[Fig 2] présente une vue plus détaillée d'un mode de réalisation du système de la figure 1 ;
[Fig 3] illustre schématiquement la gestion des aspects « sons et lumières » de la piste ;
[Fig 4] illustre des exemples d'aspects ludiques pouvant être mis en oeuvre selon l'invention ;
[Fig 5] présente un exemple d'écarts de vitesse, nécessitant la mise en oeuvre d'une sécurité adaptée ;
[Fig 6] illustre schématiquement un procédé qui peut être mis en oeuvre pour gérer un système selon l'invention ;
[Fig 7] est une vue schématique des réseaux de communication et d'échanges de données mis en oeuvre selon une deuxième approche de l'invention.

### 5. Description détaillée d'un mode de réalisation

### 5.1 Aspects généraux

L'invention propose une nouvelle approche du karting et plus précisément un enrichissement de cette activité, en offrant aux pilotes, et le cas échéant aux spectateurs, de nouveaux outils et de nouvelles sensations, par rapport à la pratique classique du karting, de façon sécurisée.

Comme rappelé en préambule, des adaptations ont déjà été envisagées pour enrichir la pratique du karting, notamment en s'inspirant des jeux vidéo. Par exemple, le Titulaire de la présente demande de brevet a proposé, dans le document de brevet FR1852834 (non publié), de mettre en oeuvre des moyens de réalité augmentée spécifiquement adaptés au karting sont proposés, reposant sur un casque particulier, dont la visière assure, outre sa fonction de protection, une fonction d'écran de projection, sur lequel des informations peuvent être projetées, en réalité augmentée, c'est à dire en superposition des éléments réels vus par le pilote.

En pratique, et malgré les solutions envisagées dans ce document, il apparaît que la sécurité des pilotes peut, dans certains cas, ne pas être assurée de façon optimale. En effet, la gestion des aspects ludiques, que ce soit via un casque à réalité augmentée ou via d'autres approches, décrites par la suite, exige le transfert d'une quantité élevée d'informations, ce qui peut nuire à la gestion de la sécurité, qui nécessite à la fois des réactions immédiates (par exemple pour arrêter un kart ou tous les karts, en cas de danger) et des transmissions fiables et certaines des commandes correspondantes. La vitesse des karts, même lorsqu'il s'agit de karts de location, est importante, et le danger est donc potentiellement élevé.

Par ailleurs, la transmission de cette quantité élevée d'informations doit se faire de façon simple et peu coûteuse, l'équipement des pistes de karting ne permettant pas le développement d'un protocole spécifique à cette application, et les karts ne permettant pas l'installation de moyens électroniques dédiés. En effet, pour mémoire, un kart est un véhicule minimaliste, ne disposant pas, tant pour des raisons de coût que de poids et de complexité, de moyens électroniques d'assistance tels qu'ils peuvent exister dans les véhicules automobiles.

Ces deux contraintes conduisaient l'homme du métier à considérer qu'il n'était pas possible, en pratique, de proposer des solutions permettant à un pilote d'interagir avec d'autres karts et/ou d'autres éléments (réels ou virtuels) de façon ludique et sécurisée, à coût acceptable.

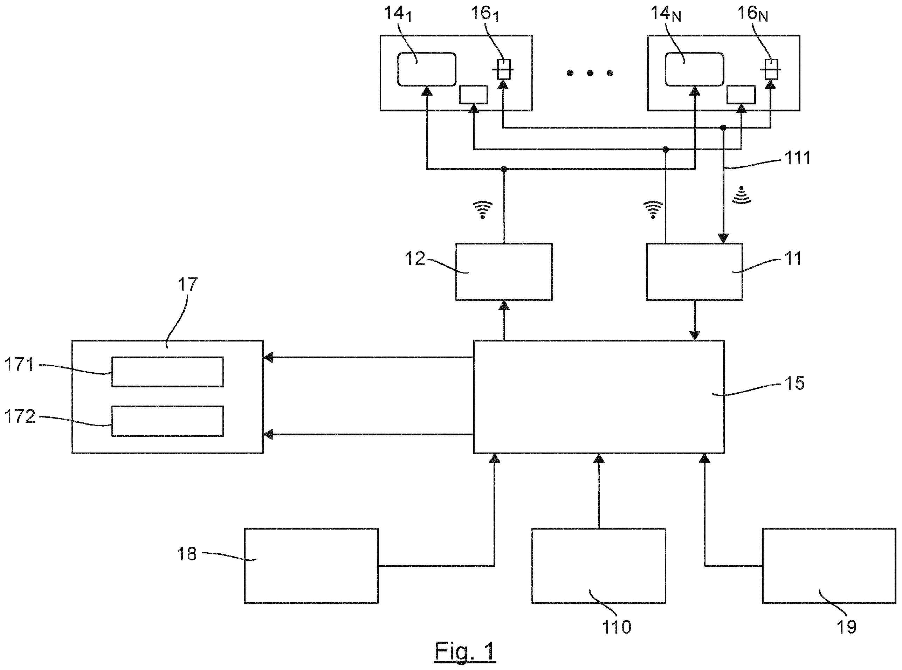

Selon l'invention cependant, comme illustré en figure 1, ceci est rendu possible en différenciant les réseaux de communication, de façon que les commandes de sécurité soient transmises par un réseau radio dédié 11, utilisé sur deux bandes de fréquences distinctes, et que les informations relatives aux aspects ludiques soient transmises par un autre canal 12, mettant en oeuvre un protocole Wifi permettant la mise en oeuvre de moyens disponibles sur le marché, et ne nécessitant pas de développement spécifiques matériels et logiciels, pour la transmission.

En résumé, dans le mode de réalisation décrit ci-après, ledit serveur communique avec chacun desdits karts à l'aide d'au moins deux réseaux de communication distincts, un premier réseau de gestion d'informations de sécurité, permettant de transmettre des commandes agissant sur le contrôle de la motorisation d'au moins un kart selon un protocole radio sécurisé, sur une première fréquence de la bande ISM, et un deuxième réseau de gestion d'informations ludiques, permettant de transmettre des données d'images vers un écran monté sur le volant chacun desdits karts selon un protocole wifi, ledit premier réseau permettant également la transmission, sur une deuxième fréquence de la bande ISM, de requêtes d'action d'un desdits karts vers ledit serveur, dont au moins des requêtes d'augmentation temporaire de la puissance dudit kart et des requêtes de réduction temporaire de la puissance d'un autre kart.

Ledit serveur comprend des moyens de gestion des positions respectives de chacun des karts, fournies par lesdits moyens de localisation, et des moyens d'analyse desdites requêtes en fonction desdites positions respectives, aptes à valider, refuser, modifier et/ou différer l'activation desdites requêtes, en émettant des commandes correspondantes vers les karts concernés, via ledit premier réseau, et des moyens de synchronisation pilotant en fonction desdites requêtes :
- des moyens de génération de données d'images au moins vers lesdits karts concernés, illustrant l'activation desdites requêtes, via ledit second réseau ; et
- des moyens de génération d'effets spéciaux, contrôlant des moyens lumineux et/ou sonores prévus à cet effet sur ladite piste de karting, pour simuler l'activation desdites requêtes.

Ainsi, selon l'invention, il est possible de proposer des améliorations, ou enrichissements, ludiques, par rapport à la pratique habituelle du karting, sans nuire à la sécurité. En effet, des moyens spécifiques, y compris un réseau dédié, sont prévus pour générer et transmettre des commandes permettant d'arrêter ou de ralentir certains karts. En parallèle, le serveur produit des images, ou des informations permettant de construire des images, qui sont restituées sur des écrans montés sur le volant des karts. La transmission est assurée par un deuxième réseau, wifi, qui ne perturbe pas la transmission des informations de sécurité.

Ce réseau wifi permet une transmission simple et efficace, adaptée aux écrans mobiles équipant les volants.

Le serveur assure également, de façon synchronisée, des effets spéciaux, qui peuvent notamment être actionnés via des données délivrées par le deuxième réseau.

Il est important de noter que, pour une mise en oeuvre ludique, mais également sportive, les variations de vitesse doivent de préférence être significatives (au minimum 10 km/h). Ceci impose une mise en oeuvre garantissant la sécurité des pilotes, par une analyse précise et une transmission très efficace des commandes par le premier réseau.

Dans ce mode de réalisation en particulier, il est prévu d'équiper les karts, au niveau de leur volant, d'un écran et de moyens d'émission / réception sous la forme d'un téléphone intelligent (« smartphone ») 14₁ à 14_{N} (pour une flotte de N karts) ou d'une tablette. Un tel appareil, par exemple selon la technique Android (marque déposée) dispose de moyens de communication Wifi et d'un écran. Il est donc seulement nécessaire de développer une application adaptée, apte à recevoir des informations de la part du serveur 15, par exemple des informations sur les actions possibles ou les effets subis, les points gagnés ou perdus, le classement...

Le kart, notamment le volant, peut être équipé d'un ou plusieurs boutons 16₁ à 16_{N}, permettant la transmission d'une commande de tir (virtuel) vers un autre kart pour le ralentir ou d'activation d'un effet de « boost » ou de « turbo », conférant un surcroit temporaire de puissance électrique, par exemple, dans le cas d'un kart électrique.

De préférence, ces commandes ne sont pas transmises par le réseau Wifi 12 (par exemple via une commande accessible par un appui sur l'écran du téléphone 14), mais par un bouton 16 émettant via le premier réseau 11, sur une première longueur d'onde dédiée 111. En effet, ces actions induisant une accélération ou un ralentissement d'un ou plusieurs karts, sont susceptibles de créer des situations de danger (accidents entre deux ou plusieurs karts, sortie de piste dans un virage...) et doivent donc être gérer de façon sécurisée et immédiate. Elles seront donc transmises par le réseau 11, qui est un réseau prioritaire, le réseau Wifi 12 restant dédié aux aspects ludiques et d'enrichissements, qui peuvent tolérer un léger retard, voire un défaut de transmission.

Le réseau 11 est de préférence un réseau sécurisé utilisant les bandes ISM, libres notamment en France. En particulier, la première longueur d'ondes appartient à la bande ISM basse, par exemple 433 MHz et la seconde longueur d'ondes appartient à la bande ISM haute, par exemple 868 MHz. Les signaux sont transmis de façon sécurisée, le cas échéant avec redondance, codes correcteurs d'erreur, cryptage...

Le réseau wifi 12 peut également être utilisé pour communiquer avec d'autres éléments participant à l'enrichissement ludiques, et notamment :
- la restitution d'une image virtuelle de l'ensemble de la piste, sur un ou plusieurs écrans 16 de grande taille, permettant au public de suivre la position des différents karts (par exemple sous la forme d'avatars) et les effets de jeu (kart ralenti ou accéléré, éléments virtuels sur la piste, sur lesquels il faut rouler ou qu'il faut au contraire éviter...) ;
- la gestion de moyens d'éclairage 171 et de restitution sonore 172 (« sons et lumières ») 17, permettant par exemple d'éclairer et suivre un kart pour illustrer qu'il est victime d'un ralentissement (éclairage rouge par exemple) ou bénéficiaire d'un effet de « boost » (éclairage vert par exemple). Des effets sonores, suivant les karts grâce à des haut-parleurs distribués sur la piste, sont également possibles. Des effets visuels et/ou sonores peuvent également être mis en oeuvre pour illustrer un effet sur une zone de la piste, générer aléatoirement, ou à la suite d'une action du pilote d'un kart, d'un responsable de l'animation, du public ;
- la gestion de moyens 18 d'interaction du public, en dehors des karts, par exemple pour interagir avec un ou plusieurs karts, en participant virtuellement à la compétition depuis un poste de pilotage virtuel, ou en visant virtuellement sur un kart à l'aide d'une arme factice (dont l'axe de visée est mesuré et transmis au serveur, de même que l'actionnement d'un tir).

Le serveur peut également recevoir des informations ou des commandes de la part d'un superviseur 19, en particulier pour des applications de sécurité : celui-ci peut notamment envoyer un ordre de ralentissement, voire d'arrêt, à un ou plusieurs karts dont le comportement est dangereux et/ou qui se trouve(nt) dans une zone de danger (dans certains cas, ceci peut également être déterminé par le serveur lui-même, après analyse des positions, de la trajectoire et/ou de la vitesse d'un kart).

Le serveur 15 dispose également des positions précises de chacun des karts sur la piste, via un système de positionnement adapté 110, par exemple à l'aide de moyens distribués sur la piste et/ou portés par le kart et/ou le casque du pilote (notamment dans le mode de réalisation mettant en oeuvre de la réalité virtuelle, décrit par la suite).

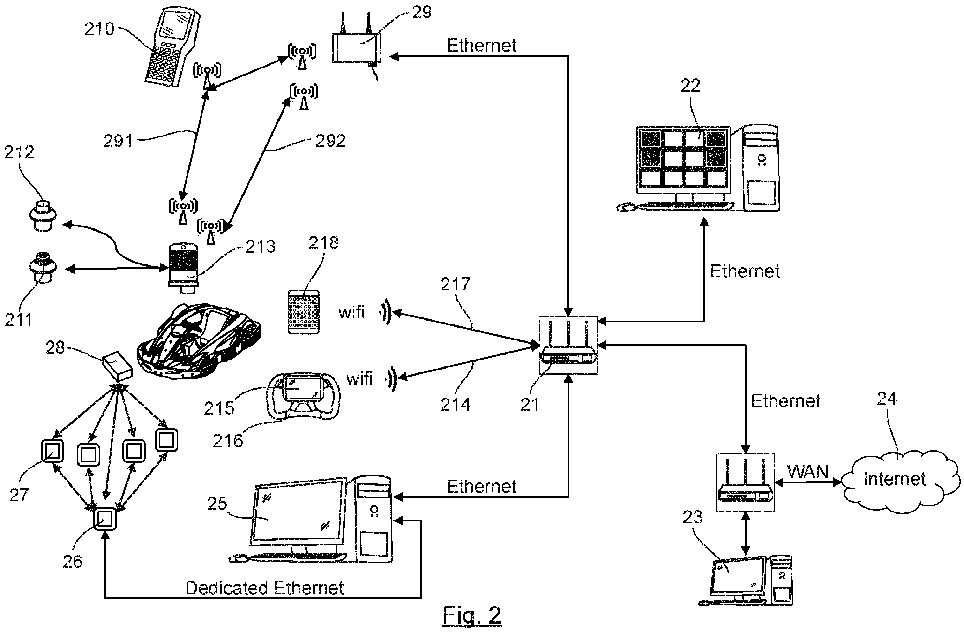

Un exemple plus détaillé de mise en oeuvre est illustré en figure 2.

Un noeud de communication 21 relie, par exemple par Ethernet, plusieurs ordinateurs :
- un serveur de jeu (« gaming server » en anglais) 22, pilotant les différents aspects ludiques ;
- un serveur 23 de gestion et d'affichage des temps et/ou des places, pouvant être connecté au réseau Internet 24 ;
- un serveur 25 de positionnement, relié à une antenne maître 26 qui communique avec une pluralité d'antennes 27 distribuées le long de la piste et qui reçoivent les signaux émis par des tags 28 portés par chacun des karts. Le serveur de positionnement peut notamment fonctionner en ultra haute fréquence (UWB ou « Ultra Wide Band », entre 3 et 10 GHz).

Le noeud de communication 21 distribue les signaux de sécurité vers un dispositif 29 de gestion de la sécurité, qui les émet immédiatement, via la première longueur d'onde 291 du réseau radio dédié. Des commandes de sécurité peuvent également être fournies via une télécommande 210 détenue par un superviseur, pour agir immédiatement sur un ou plusieurs karts, en cas de danger.

Les commandes équipant le volant du kart comprennent notamment un bouton « boost » 211 et un bouton « tir » 212, que le pilote peut actionner à sa convenance. Les commandes correspondantes sont transmises, via un convertisseur analogique/numérique (CAN) et un transpondeur 213 porté par le kart, communiquant via la seconde longueur d'onde 292 du réseau radio dédié.

Le point d'accès 21 assure par ailleurs la transmission d'informations Wifi (soit directement, soit par l'intermédiaire d'un dispositif dédié non illustré). Ces informations comprennent notamment des informations 214 destinées à être affichées sur l'écran 215 porté par le volant 216 de chaque kart. Selon un mode de réalisation, des informations 217 sont également transmises vers un élément d'affichage 218, par exemple un écran à LED, monté à l'arrière du kart pour communiquer avec les karts qui le suivent (par exemple pour confirmer qu'un tir a fait mouche, ou que le kart est actuellement ou bientôt dans un mode accéléré ou ralenti).

Le serveur 22 peut également prendre en compte des actions effectuées par le public, qui peut par exemple voter pour choisir son favori et lui allouer un « bonus », ou au contraire pénaliser un concurrent par un « malus », ou choisir de faire apparaître un élément virtuel devant un pilote et/ou un emplacement prédéterminé (ou choisi de façon aléatoire) de la piste. Le serveur envoie des informations correspondantes vers l'écran 215, qui les restitue visuellement au pilote. Selon les cas, une partie plus ou moins importante du traitement est effectuée par le serveur ou par les moyens de traitement associés (par exemple dans un téléphone intelligent) à l'écran 215, selon leurs capacités.

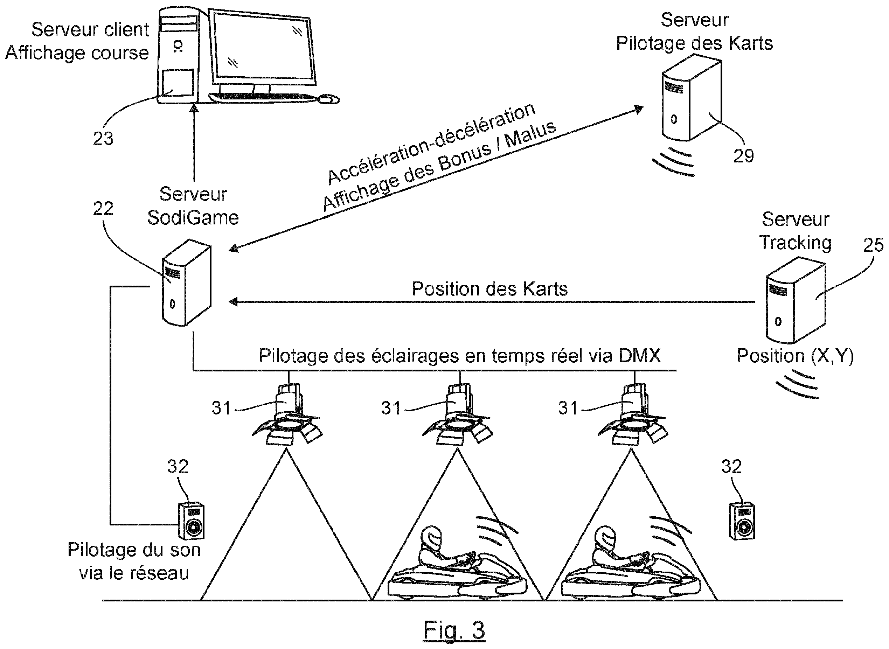

Parallèlement, le serveur 22 pilote les effets visuels et/ou sonores, comme illustré par exemple dans le mode de réalisation de la figure 3. Il contrôle notamment des éclairages 31 et des haut-parleurs 32 distribués autour et/ou au-dessus de la piste. Selon les effets, les éclairages et/ou les sons peuvent être orientés sur une zone de la piste, le cas échéant sur la forme d'hologrammes, pour définir un objet virtuel, ou suivre un kart, pour signaler à tous qu'il bénéficie d'un bonus (et donc par exemple qu'il se déplace plus rapidement) ou d'un malus (et donc par exemple qu'il se déplace plus lentement).

L'application d'un « bonus » ou d'un « malus », proposée par un spectateur, ou un ensemble des spectateurs, ou rendu disponible aléatoirement via le serveur, ou en fonction du comportement du pilote (sécurité et/ou passage sur un objet virtuel) peut par exemple se comptabiliser sous la forme de points (le pilote devant gagner un maximum de points), de temps (ajouté ou soustrait à son temps, de façon à pouvoir modifier son classement ou, fournissant le cas échéant un temps supplémentaire sur la piste...). Selon une autre approche, ou en combinaison, le « bonus » et le « malus » peuvent agir sur la puissance disponible du moteur, en particulier sur des moteurs électriques.

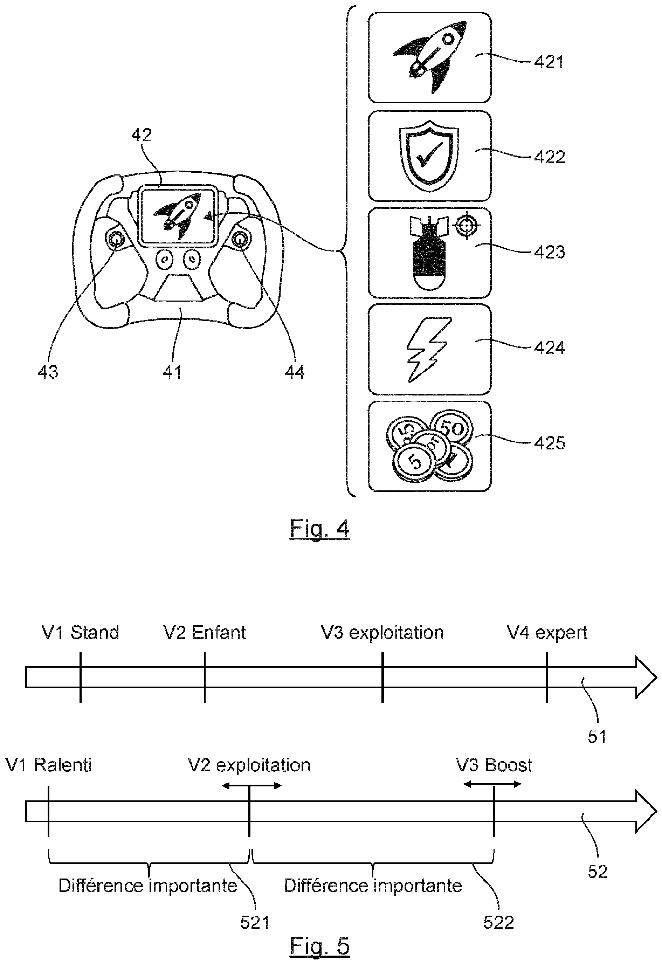

Comme l'illustre l'exemple de la figure 4, le volant 41 du kart porte l'écran 42 et au moins deux boutons, un bouton « boost » (turbo) 43 et un bouton tir 44. Les aspects ludiques peuvent être illustrés de façon simplifiée sur l'écran 42, par exemple :
- une fusée 421 pour illustrer un effet d'accélération pendant un laps de temps prédéterminé (dont le décompte peut également apparaître sur l'écran), lorsque le pilote a appuyé sur le bouton 43 et que les conditions de sécurité ont été validées ;
- un bouclier 422 pour illustrer une protection (immunité) contre un tir ou attaque d'un autre kart ou du public ;
- un missile 423, offrant la possibilité de tirer à l'aide du bouton 44 (une image similaire, par exemple sur un fond rouge, peut avertir le pilote qu'il a lui-même été frappé par un tel missile) ;
- un éclair 424, donnant au pilote la possibilité d'agir (« foudroyer ») sur tous ses concurrents, pour les ralentir ;
- un cumul de points 425 ;

Dans un mode de réalisation particulier, le bouton de tir peut être complété ou remplacé par une arme factice, mobile pour permettre au pilote (ou à une personne l'accompagnant, dans un kart biplace), de viser un autre kart. Dans ce cas, l'information de tir comprend également des données d'orientation du tir, permettant au serveur de valider ou non le succès de celui-ci.

### 5.2 gestion de la sécurité

Il est important de noter que l'approche de l'invention se distingue de celle des jeux vidéo non seulement par la mise en oeuvre de transmissions adaptées, à l'aide de plusieurs réseaux de communication et un nécessité d'une localisation réelle et précise des karts, mais également du fait de la nécessité d'assurer la sécurité des pilotes et d'éviter, autant que faire se peut, les incidents ou accidents.

En outre, comme illustré sur la figure 4, l'approche ludique augmente les risques, du fait des possibles variations importantes de vitesse des karts, induites par les effets d'accélération, ralentissement ou autre. Dans une exploitation classique 41, on peut définir quatre vitesses :
- V1 « stand » : par exemple 10 km/h ;
- V2 « enfant » : par exemple 20km/h ;
- V3 « exploitation » : par exemple 35km/h ;
- V4 « expert » : par exemple 45km/h.

Les écarts entre ces vitesses sont relativement faibles, et surtout, ces vitesses sont dédiées à des zones (stands) et/ou à des typologies d'utilisateurs (enfants, experts...) et s'appliquent de façon homogène à tous les karts : on ne change pas de vitesse en cours d'exploitation.

En revanche, dans l'exploitation ludique 42 de l'invention, on distingue au moins trois types de vitesses :
- V1 « ralenti » : par exemple 10 km/h ;
- V2 « exploitation » : par exemple 30km/h ;
- V3 « boost» : par exemple 45km/h.

Les différences 421, 422 de vitesse entre les trois situations sont donc importantes (par exemple entre V1=10km/h et V3=45km/h). Ceci est souhaitable, pour « ressentir » les effets des actions. Mais cela introduit des risques, en particulier du fait que les vitesses ne sont pas appliquées globalement, à toute la flotte de karts, mais spécifiquement à un kart. Il est par exemple possible que l'un des karts bénéficie d'une vitesse V3 alors que celui qui est juste devant lui est ralenti à la vitesse V1. En outre, les changements de vitesse peuvent s'exercer à tout moment, de façon impromptue (par exemple sur décision d'un pilote ou du public) et sur un seul kart. Le risque de contacts voire d'accidents est donc élevé.

Selon un aspect important de l'invention, on prévoit donc d'éviter, ou à tout le moins de fortement réduire ce risque.

Pour ceci, le serveur met en oeuvre un contrôle des aspects ludiques qui peut notamment autoriser, interdire, moduler et/ou différer l'application d'un « bonus » ou « malus ». En effet, il peut être souhaitable qu'un effet « turbo » obtenu par un pilote, et actionné par celui-ci, par exemple via le bouton présent sur son volant ou un ordre vocal, ne soit pas appliqué immédiatement, par exemple si celui-ci se trouve dans un virage, ou qu'un kart plus lent est juste devant lui.

Il peut en être de même pour un effet de « malus », qui serait envoyé par un spectateur ou un autre kart : il ne faut pas que le kart ralentisse fortement dans un virage, et/ou lorsqu'il est suivi de près par un autre kart, notamment si celui-ci bénéficie de l'effet d'accélération.

Le serveur peut donc contrôler l'application de ces effets, qui se traduisent par exemple par une augmentation ou une réduction de la puissance, en fonction des besoins. De la même façon, le serveur peut décider de lui-même d'actions particulières, pour des raisons de sécurité.

Cet aspect essentiel est éloigné des jeux vidéo, dans lesquels les accidents font partis du principe même du jeu. Selon l'invention, les actions, notamment les actions entrainant une variation de vitesse importante (augmentation ou réduction de la vitesse maximale par exemple) ou un autre effet sur un kart, est soumise à une autorisation, et le cas échéant une adaptation (modulation, retard...), délivrée par le serveur. Et cette autorisation et/ou adaptation est délivrée via le premier réseau dédié à la sécurité, qui garantit une transmission sûre et immédiate.

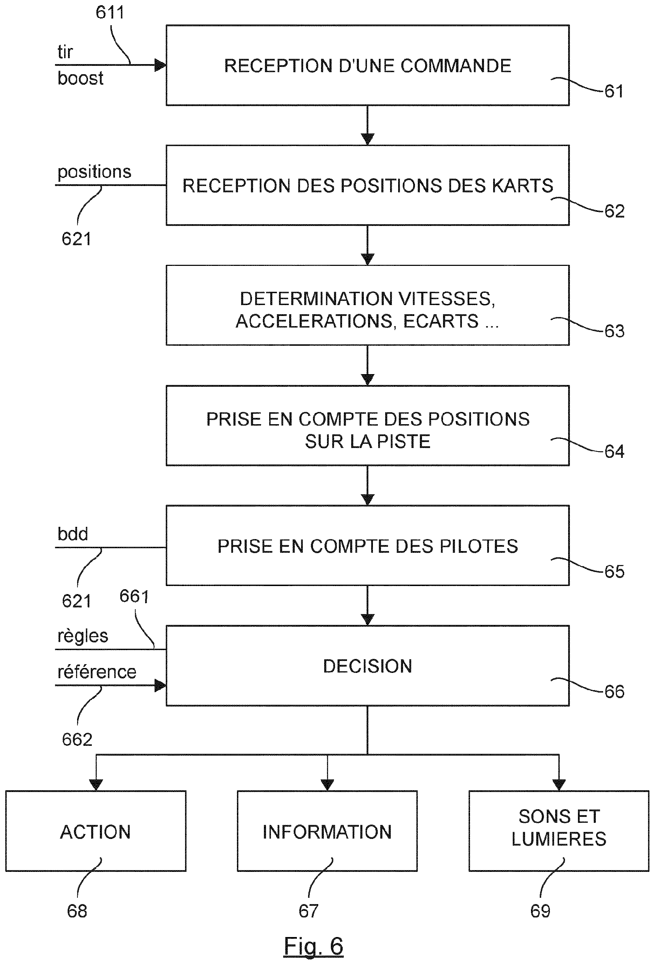

Ceci peut par exemple être mis en oeuvre selon le procédé de l'invention, dont un exemple est illustré par la figure 6.

Le serveur reçoit (61) une commande de jeu 611, par exemple une demande de « boost » ou un tir, via le premier réseau.

Il prend alors en compte (62) la position du ou des karts concernés, ainsi que des karts à proximité, en fonction des données 621 de positionnement. Il détermine (63) également différentes informations, telles que, par exemple, la vitesse de chaque kart, son accélération, les écarts entre les karts...

Il tient également compte (64) la position des karts sur la piste, car les décisions sont différentes selon que le kart se trouver en ligne droite ou dans une courbe ou un virage. Il peut aussi tenir compte de la trajectoire (le kart est-il sur une bonne trajectoire ? Est-il orienté correctement par rapport à la piste ?...). Le cas échéant, il peut également recevoir des données relatives au pilote, par exemple fournies par une base de données 651. En effet, selon son expérience, et/ou son comportement précédent, les décisions peuvent être adaptées.

En fonction de toutes ces informations, une décision est prise (66) sur l'application de la commande reçue, par exemple en fonction d'une base de règles 661, pilotée par un programme informatique, mettant en oeuvre par exemple une intelligence artificielle (permettant progressivement d'optimiser les décisions en fonction de l'expérience). Cette décision peut prendre en compte de données de référence 662, correspondant au comportement d'un kart « de référence », préenregistré, permettant de connaître par exemple la meilleure trajectoire, les vitesses maximales dans les différentes zones, les instants et intensité de freinage...

Ces décisions conduisent à la transmission (68) d'une action, si la décision est favorable, par exemple pour agir sur la puissance du moteur (accélération ou ralentissement) via le premier réseau, ainsi qu'à la transmission (67) d'informations via le deuxième réseau à destination des écrans montés sur les volants, pour informer les pilotes. Enfin, l'information est également délivrée (69) aux moyens de sons et lumières. Lorsque, lors de l'étape 66, le serveur estime qu'il y a une situation de danger, il peut adapter sa décision de plusieurs manières :
- refus, ou annulation, de la commande ;
- report de la commande (qui sera applicable quelques secondes plus tard et/ou lorsque le kart sera dans une autre position sur la piste) ;
- modification, ou modulation, de la commande (le ralentissement ou l'accélération peut être plus faible, ou progressif) ;

Dans ces différentes situations, une information 67 est transmise, pour que le pilote soit informé. De même, les effets lumineux et sonores 69 peuvent être adaptés.

Le serveur 15 comprend des moyens de synchronisation des différents aspects, notamment l'application de la commande via le premier réseau, adaptée le cas échéant comme décrit ci-dessus, et en conséquence des éléments d'images transmis vers le ou les karts correspondants et des effets de sons et lumières. Cette synchronisation prend en compte prioritairement les aspects relatifs à la sécurité, puis adapte en conséquence les aspects ludiques.

### 5.3 variante de mise en œuvre

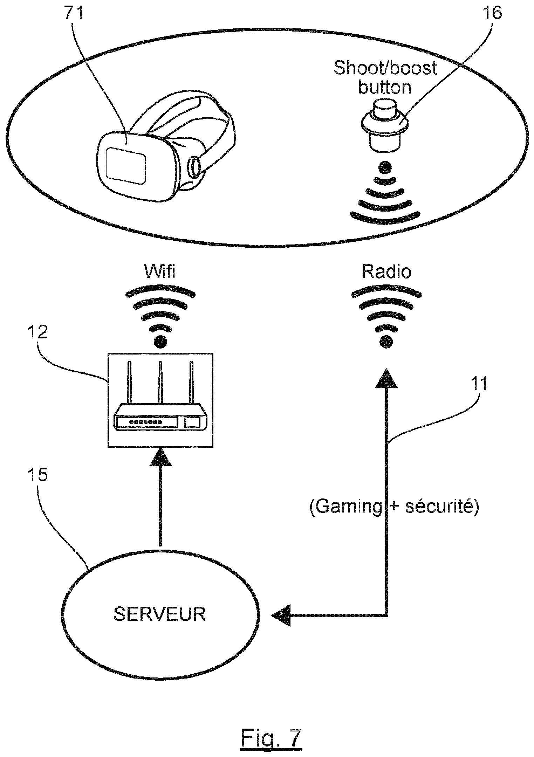

Selon une deuxième approche illustrée par la figure 7, les pilotes sont placés dans une situation de réalité virtuelle. Dans ce cas, ils sont équipés d'un casque de réalité virtuelle 71. Ils ne distinguent donc plus la piste réelle, et il est possible de les placer dans un « monde virtuel », construit par le serveur.

Dans ce cas, le casque peut déterminer lui-même sa position, en s'affranchissant d'un échange avec un serveur de positionnement. Les informations de position sont transmises au serveur, de préférence via le premier réseau. Les autres aspects décrits précédemment peuvent s'appliquer également.

En particulier, on comprend que les aspects relatifs à la sécurité sont similaires, sinon accrus. Il pourra d'ailleurs être envisagé d'abaisser systématiquement les vitesses, par rapport au précédent mode de réalisation.

### 5.4 autres aspects optionnels

De nombreuses variantes peuvent bien sûr être envisagées. Par exemple :
- le pilote peut lui-même interagir avec les autres karts, par exemple via un tir virtuel, visible dans la visière (et le cas échéant de façon réelle, à l'aide d'un faisceau laser), par exemple pour ralentir le pilote devant lui (cette action, autorisée par exemple après être passé sur un objet correspondant pouvant temporairement limiter la puissance du kart visé) ;
- le tir peut être indifférencié (il est dirigé vers le kart précédent le plus proche) ou mettre en oeuvre une visée ;
- le tir peut être unique ou multiple (la réception de plusieurs tirs amplifiant l'effet, par exemple le ralentissement) ;
- l'orientation du tir peut être celle du kart, ou celle d'un instrument de visée simulant une arme (par exemple sur un kart biplace) ;
- diverses interactions avec le public sont possibles : le public peut disposer lui-même d'armes factices, désigner un pilote pour qu'il bénéficie d'un bonus ou d'un malus, participer en parallèle et virtuellement à la course, via un écran et un simulateur de kart...
- outre la puissance électrique, il peut être possible d'agir sur d'autres éléments mécaniques du kart (diminution de la course de la pédale d'accélérateur, blocage de l'une des roues pour forcer un tête à queue...) ;

## Revendications

1. Système de contrôle pour contrôler une pluralité de karts répartis sur une piste de karting, comprenant un serveur de contrôle, des moyens de localisation portés par chacun desdits karts et des moyens de communication permettant au serveur de communiquer avec chacun desdits karts à l'aide d'au moins deux réseaux de communication distincts, un premier réseau de gestion d'informations de sécurité, permettant de transmettre des commandes agissant sur le contrôle de la motorisation d'au moins un kart selon un premier protocole radio sécurisé, et un deuxième réseau de gestion d'informations ludiques, permettant de transmettre des données d'images vers un écran monté sur chacun desdits karts selon un deuxième protocole,
et dans lequel ledit serveur comprend :
- des moyens de gestion des positions respectives de chacun des karts, fournies par lesdits moyens de localisation, et des moyens d'analyse de requêtes d'action émises par lesdits karts, comprenant au moins des requêtes d'augmentation et/ou de réduction de puissance, en fonction desdites positions respectives, aptes à valider, refuser, modifier et/ou différer l'activation desdites requêtes, en émettant des commandes correspondantes vers les karts concernés, via ledit premier réseau, et des moyens de synchronisation pilotant en fonction desdites requêtes d'action ; et
- des moyens de génération de données d'images au moins vers lesdits karts concernés, illustrant l'activation desdites requêtes d'action, via ledit second réseau.

2. Système selon la revendication 1, dans lequel lesdits moyens de localisation mettent en oeuvre un troisième réseau de communication avec ledit serveur, mettant en oeuvre une communication de type Ultra Large Bande.

3. Système selon la revendication 1, dans lequel ledit premier protocole met en oeuvre une communication sur une première fréquence de la bande ISM.

4. Système selon la revendication 3, dans lequel lesdites requêtes d'action sont transmises via ledit premier réseau, sur une deuxième fréquence de la bande ISM.

5. Système selon la revendication 1, dans lequel ledit deuxième protocole est un protocole Wifi.

6. Système selon la revendication 1, dans lequel lesdites données d'images sont restituées sur un écran monté sur le volant.

7. Système selon la revendication 6, dans lequel ledit écran est un écran amovible, sous la forme d'un téléphone mobile intelligent.

8. Système selon la revendication 1, dans lequel ledit serveur comprend des moyens de génération d'effets spéciaux, contrôlant des moyens lumineux et/ou sonores prévus à cet effet sur ladite piste de karting, pour simuler l'activation desdites requêtes.

9. Système selon la revendication 1, dans lequel lesdits moyens d'analyse valident, refusent, modifient et/ou diffèrent l'activation d'une requête en fonction d'une pluralité de critères comprenant :
- la position dudit kart émetteur et/ou dudit kart voisin sur ladite piste, de façon à éviter notamment une modification de puissance dans une zone dangereuse de ladite piste ;
- la position dudit kart émetteur et/ou dudit kart voisin par rapport à l'ensemble des karts à proximité ;
- l'orientation, la vitesse et/ou l'accélération dudit kart émetteur et/ou dudit kart voisin par rapport à ladite piste ;
- l'orientation, la vitesse et/ou l'accélération dudit kart émetteur et/ou dudit kart voisin par rapport à l'ensemble des karts à proximité ;
- des informations sur la possibilité d'activer ladite requête, en fonction d'un ensemble de règles permettant de charger un compteur de disponibilité.

10. Système selon la revendication 9, dans lequel les moyens d'analyse tiennent compte également d'orientation, vitesse et/ou d'accélération de référence, préenregistrées par ledit serveur.

11. Système selon la revendication 1, dans lequel lesdites requêtes comprennent au moins des requêtes d'augmentation temporaire de la puissance dudit kart et des requêtes de réduction temporaire de la puissance d'un autre kart.

12. Système selon la revendication 11, dans lequel lesdites requêtes de réduction temporaire de la puissance d'un kart voisin du kart émetteur correspondent à l'envoi d'un missile fictif par le kart émetteur, dont l'envoi et/ou l'impact sont illustrés par lesdits moyens de génération d'effets spéciaux.

13. Système selon la revendication 12, dans lequel ledit serveur applique ledit impact au kart précédent le kart émetteur le plus proche.

14. Système selon la revendication 12, dans lequel ledit serveur détermine une trajectoire dudit missile fictif en fonction de la position et de l'orientation dudit kart émetteur et l'existence ou non d'un impact sur un kart précédent ledit kart émetteur, en fonction de la position, l'orientation, la vitesse et/ou la distance dudit kart précédent.

15. Système selon la revendication 14, dans lequel ledit kart émetteur comprend des moyens de modification de l'orientation d'un tir de missile, par rapport à l'orientation dudit kart émetteur.

16. Système selon la revendication 15, dans lequel ledit kart émetteur est un kart biplace, embarquant un pilote et un passager, lesdits moyens de modification de l'orientation d'un tir de missile étant manipulés par ledit passager.

17. Système selon la revendication 12, dans lequel que ledit impact varie en intensité selon un nombre de requêtes successives générées par ledit kart émetteur dans un laps de temps prédéterminé.

18. Système selon la revendication 1, dans lequel le pilote d'au moins un desdits karts est équipés de moyens de réalité virtuelle, alimentés via ledit deuxième réseau de gestion d'informations ludiques.

19. Système selon la revendication 18, dans lequel lesdits moyens de réalité virtuelle comprennent des moyens de localisation du kart correspondant, coopérant avec des moyens de transmission desdites informations de localisation via ledit deuxième réseau de gestion d'informations ludiques.

20. Système selon la revendication 1, dans lequel ledit serveur comprend des moyens de construction d'une image virtuelle de ladite piste, et des moyens de transmission de ladite image virtuelle vers au moins un écran destiné à des spectateurs ou des joueurs.

21. Système selon la revendication 1, dans lequel ledit serveur comprend des moyens d'interactivité, permettant à un spectateur d'émettre des requêtes aptes à agir sur au moins un desdits karts.

22. Procédé de gestion d'un système selon l'une quelconque des revendications 1 à 21, comprenant les étapes suivantes dans un serveur de gestion :
- détermination de la position de chacun desdits karts ;
- émission de commandes agissant sur le contrôle de la motorisation d'au moins un kart via ledit premier réseau de gestion d'informations de sécurité mettant en oeuvre un protocole radio sécurisé ;
- réception de requêtes d'action d'un desdits karts, dont au moins des requêtes d'augmentation temporaire de la puissance dudit kart et des requêtes de réduction temporaire de la puissance d'un autre kart;
- analyse desdites requêtes en fonction desdites positions respectives, de façon à valider, refuser, modifier et/ou différer l'activation desdites requêtes ;
- émission de commandes correspondant à ladite activation validée, refusée, modifiée et/ou différée vers les karts concernés, via ledit premier réseau ;
- génération de données d'images destinées au moins aux karts concernés, illustrant l'activation desdites requêtes ;
- émission desdites données d'image via ledit second réseau, pour affichage desdites images sur ledit écran desdits karts concernés.

23. Serveur de contrôle d'une pluralité de karts répartis sur une piste de karting, alimenté par des moyens de localisation portés par chacun desdits karts et comprenant :
- des moyens de communication permettant au serveur de communiquer avec chacun desdits karts à l'aide d'au moins deux réseaux de communication distincts, un premier réseau de gestion d'informations de sécurité, permettant de transmettre des commandes agissant sur le contrôle de la motorisation d'au moins un kart selon un premier protocole radio sécurisé, et un deuxième réseau de gestion d'informations ludiques, permettant de transmettre des données d'images vers un écran monté sur chacun desdits karts selon un deuxième protocole,
- des moyens de gestion des positions respectives de chacun des karts, fournies par lesdits moyens de localisation, et des moyens d'analyse de requêtes d'action émises par lesdits karts, comprenant au moins des requêtes d'augmentation et/ou de réduction de puissance, en fonction desdites positions respectives, aptes à valider, refuser, modifier et/ou différer l'activation desdites requêtes, en émettant des commandes correspondantes vers les karts concernés, via ledit premier réseau, et des moyens de synchronisation pilotant en fonction desdites requêtes d'action ; et
- des moyens de génération de données d'images au moins vers lesdits karts concernés, illustrant l'activation desdites requêtes d'action, via ledit second réseau.

## Patentansprüche

1. Steuersystem zum Steuern einer Vielzahl von Gokarts, die auf einer Kartbahn verteilt sind, umfassend einen Steuerserver, Ortungsmittel, die von jedem der Gokarts getragen werden, und Kommunikationsmittel, die es dem Server ermöglichen, mit jedem der Gokarts mithilfe mindestens zweier getrennter Kommunikationsnetze, einem ersten Verwaltungsnetz für Sicherheitsinformationen, das es ermöglicht, Befehle, die auf die Steuerung der Motorisierung mindestens eines Gokarts wirken, gemäß einem ersten gesicherten Funkprotokoll zu übertragen, und einem zweiten Verwaltungsnetz für spielerische Informationen, das es ermöglicht, Bilddaten auf einen Bildschirm, der auf jedem der Gokarts montiert ist, gemäß einem zweiten Protokoll zu übertragen, zu kommunizieren,
und wobei der Server umfasst:
- Mittel zum Verwalten der jeweiligen Positionen eines jeden der Gokarts, die von den Ortungsmitteln bereitgestellt werden, und Mittel zum Analysieren von Handlungsanfragen, die von den Gokarts ausgegeben werden, umfassend mindestens Anfragen zum Erhöhen und/oder Verringern von Leistung in Abhängigkeit von den jeweiligen Positionen, die imstande sind, die Aktivierung der Anfragen zu bestätigen, abzulehnen, zu modifizieren und/oder aufzuschieben, und jeweilige Befehle an die betreffenden Gokarts über das erste Netz ausgeben, und Mittel zum Synchronisieren, die in Abhängigkeit von den Handlungsanfragen ansteuern; und
- Mittel zum Erzeugen von Bilddaten mindestens zu den betreffenden Gokarts, die die Aktivierung der Handlungsanfragen darstellen, über das zweite Netz.

2. System nach Anspruch 1, wobei die Ortungsmittel ein drittes Kommunikationsnetz mit dem Server einsetzen, das eine Kommunikation des Typs Ultrabreitband einsetzt.

3. System nach Anspruch 1, wobei das erste Protokoll eine Kommunikation auf einer ersten Frequenz des ISM-Bandes einsetzt.

4. System nach Anspruch 3, wobei die Handlungsanfragen über das erste Netz übertragen werden, auf einer zweiten Frequenz des ISM-Bandes ermöglicht.

5. System nach Anspruch 1, wobei das zweite Protokoll ein WiFi-Protokoll ist.

6. System nach Anspruch 1, wobei die Bilddaten auf einem Bildschirm wiedergegeben werden, der auf dem Lenkrad montiert ist.

7. System nach Anspruch 6, wobei der Bildschirm ein abnehmbarer Bildschirm in Form eines intelligenten Mobiltelefons ist.

8. System nach Anspruch 1, wobei der Server Mittel zum Erzeugen von Sondereffekten umfasst, die Leucht- und/oder Schallmittel steuern, die zu diesem Zweck auf der Kartbahn vorgesehen sind, um die Aktivierung der Anfragen zu simulieren.

9. System nach Anspruch 1, wobei die Mittel zur Analyse die Aktivierung einer Anfrage in Abhängigkeit von einer Vielzahl von Kriterien bestätigen, ablehnen, modifizieren und/oder aufschieben, umfassend:
- die Position des Sender-Gokarts und/oder des benachbarten Gokarts auf der Bahn, um insbesondere eine Leistungsmodifizierung in einem gefährlichen Bereich der Bahn zu vermeiden;
- die Position des Sender-Gokarts und/oder des benachbarten Gokarts in Bezug auf die Gesamtheit der Gokarts in der Nähe;
- die Ausrichtung, die Geschwindigkeit und/oder die Beschleunigung des Sender-Gokarts und/oder des benachbarten Gokarts in Bezug auf die Bahn;
- die Ausrichtung, die Geschwindigkeit und/oder die Beschleunigung des Sender-Gokarts und/oder des benachbarten Gokarts in Bezug auf die Gesamtheit der Gokarts in der Nähe;
- Informationen über die Möglichkeit, die Anfrage in Abhängigkeit von einer Einheit von Regeln zu aktivieren, die es ermöglichen, einen Verfügbarkeitszähler zu laden.

10. System nach Anspruch 9, wobei die Mittel zur Analyse auch Bezugsausrichtung, -geschwindigkeit und/oder -beschleunigung berücksichtigen, die vorab vom Server gespeichert werden.

11. System nach Anspruch 1, wobei die Anfragen mindestens Anfragen zur vorübergehenden Erhöhung der Leistung des Gokarts und Anfragen zur vorübergehenden Verringerung der Leistung eines anderen Gokarts umfassen.

12. System nach Anspruch 11, wobei die Anfragen zur vorübergehenden Verringerung der Leistung eines zum Sender-Gokart benachbarten Gokarts der Sendung eines fiktiven Flugkörpers durch das Sender-Gokart entsprechen, dessen Sendung und/oder Einschlag durch die Mittel zum Erzeugen von Sondereffekten dargestellt werden.

13. System nach Anspruch 12, wobei der Server den Einschlag an dem dem Sender-Gokart nächstgelegenen vorangehenden Gokart anwendet.

14. System nach Anspruch 12, wobei der Server eine Flugbahn des fiktiven Flugkörpers in Abhängigkeit von der Position und der Ausrichtung des Sender-Gokarts und dem Vorhandensein oder nicht eines Einschlags an einem dem Sende-Gokart vorangehenden Gokart in Abhängigkeit von der Position, der Ausrichtung, der Geschwindigkeit und/oder dem Abstand des vorangehenden Gokarts bestimmt.

15. System nach Anspruch 14, wobei das Sender-Gokart Mittel zum Modifizieren der Ausrichtung eines Flugkörperabschusses in Bezug auf die Ausrichtung des Sender-Gokarts umfasst.

16. System nach Anspruch 15, wobei das Sender-Gokart ein Zweisitzer-Gokart ist, das einen Piloten und einen Beifahrer aufnimmt, wobei die Mittel zum Modifizieren der Ausrichtung eines Flugkörperabschusses von dem Beifahrer gehandhabt werden.

17. System nach Anspruch 12, wobei der Einschlag an Intensität gemäß einer Anzahl aufeinanderfolgender Anfragen variiert, die von dem Sender-Gokart in einer vorbestimmten Zeitspanne erzeugt werden.

18. System nach Anspruch 1, wobei der Pilot mindestens eines der Gokarts mit Mitteln für virtuelle Realität ausgestattet ist, die über das zweite Verwaltungsnetz für spielerische Informationen versorgt werden.

19. System nach Anspruch 18, wobei die Mittel für virtuelle Realität Mittel zum Orten des entsprechenden Gokarts umfassen, die mit den Mitteln zum Übertragen der Ortungsinformationen über das zweite Verwaltungsnetz für spielerische Informationen zusammenwirken.

20. System nach Anspruch 1, wobei der Server Mittel zum Aufbauen eines virtuellen Bildes der Bahn und Mittel zum Übertragen des virtuellen Bildes auf mindestens einen Bildschirm umfasst, der für Zuseher oder Spieler bestimmt ist.

21. System nach Anspruch 1, wobei der Server Interaktivitätsmittel umfasst, die es einem Zuseher ermöglichen, Anfragen auszugeben, die imstande sind, auf mindestens eines der Gokarts zu wirken.

22. Verfahren zum Verwalten eines Systems nach einem der Ansprüche 1 bis 21, umfassend die folgenden Schritte in einem Verwaltungsserver:
- Bestimmen der Position eines jeden der Gokarts;
- Ausgeben von Befehlen, die auf die Steuerung der Motorisierung mindestens eines Gokarts wirken, über das erste Verwaltungsnetz für Sicherheitsinformationen, das ein gesichertes Funkprotokoll einsetzt;
- Empfangen von Handlungsanfragen von einem der Gokarts, darunter mindestens Anfragen zum vorübergehenden Erhöhen der Leistung des Gokarts und Anfragen zum vorübergehenden Verringern von Leistung eines anderen Gokarts;
- Analyse der Anfragen in Abhängigkeit von den jeweiligen Positionen, um die Aktivierung der Anfragen zu bestätigen, abzulehnen, zu modifizieren und/oder aufzuschieben;
- Ausgabe von Befehlen entsprechend der bestätigten, abgelehnten, modifizierten und/oder aufgeschobenen Aktivierung an die betreffenden Gokarts über das erste Netz;
- Erzeugung von Bilddaten, die mindestens für die betreffenden Gokarts bestimmt sind, die die Aktivierung der Handlungsanfragen darstellen;
- Ausgeben der Bilddaten über das zweite Netz zum Anzeigen der Bilder auf dem Bildschirm der bestreffenden Gokarts.

23. Server zur Steuerung einer Vielzahl von Gokarts, die auf einer Kartbahn verteilt sind, der von Ortungsmitteln versorgt wird, die von jedem der Gokarts getragen werden, und umfassend:
- Kommunikationsmittel, die es dem Server ermöglichen, mit jedem der Gokarts mithilfe mindestens zweier getrennter Kommunikationsnetze, einem ersten Verwaltungsnetz für Sicherheitsinformationen, das es ermöglicht, Befehle, die auf die Steuerung der Motorisierung mindestens eines Gokarts wirken, gemäß einem ersten gesicherten Funkprotokoll zu übertragen, und einem zweiten Verwaltungsnetz für spielerische Informationen, das es ermöglicht, Bilddaten auf einen Bildschirm, der auf jedem der Gokarts montiert ist, gemäß einem zweiten Protokoll zu übertragen, zu kommunizieren,
- Mittel zum Verwalten der jeweiligen Positionen eines jeden der Gokarts, die von den Ortungsmitteln bereitgestellt werden, und Mittel zum Analysieren von Handlungsanfragen, die von den Gokarts ausgegeben werden, umfassend mindestens Anfragen zum Erhöhen und/oder Verringern von Leistung in Abhängigkeit von den jeweiligen Positionen, die imstande sind, die Aktivierung der Anfragen zu bestätigen, abzulehnen, zu modifizieren und/oder aufzuschieben, und jeweilige Befehle an die betreffenden Gokarts über das erste Netz ausgeben, und Mittel zum Synchronisieren, die in Abhängigkeit von den Handlungsanfragen ansteuern; und
- Mittel zum Erzeugen von Bilddaten mindestens zu den betreffenden Gokarts, die die Aktivierung der Handlungsanfragen darstellen, über das zweite Netz.

## Claims

1. A control system for controlling a plurality of karts distributed on a karting track, comprising a control server, locating means carried by each of said karts and communication means allowing the server to communicate with each of said karts using at least two separate communication networks, a first safety information management network, allowing to transmit commands acting on the control of the motorisation of at least one kart according to a first secure radio protocol, and a second gaming information management network, allowing to transmit image data to a screen mounted on each of said karts according to a second protocol,
and wherein said server comprises:
- means for managing the respective positions of each of the karts, provided by said locating means, and means for analysing action requests emitted by said karts, comprising at least requests for increasing and/or reducing power, according to said respective positions, capable of validating, refusing, modifying and/or delaying the activation of said requests, by emitting corresponding commands to the concerned karts, via said first network, and synchronisation means controlling according to said action requests; and
- means for generating image data at least to said concerned karts, illustrating the activation of said action requests, via said second network.

2. The system according to claim 1, wherein said locating means implement a third communication network with said server, implementing an Ultra Wide Band type communication.

3. The system according to claim 1, wherein said first protocol implements a communication on a first frequency of the ISM band.

4. The system according to claim 3, wherein said action requests are transmitted via said first network, on a second frequency of the ISM band.

5. The system according to claim 1, wherein said second protocol is a Wi-Fi protocol.

6. The system according to claim 1, wherein said image data are reproduced on a screen mounted on the steering wheel.

7. The system according to claim 6, wherein said screen is a removable screen, in the form of a smartphone.

8. The system according to claim 1, wherein said server comprises means for generating special effects, controlling light and/or sound means provided for this purpose on said karting track, to simulate the activation of said requests.

9. The system according to claim 1, wherein said analysis means validate, refuse, modify and/or delay the activation of a request according to a plurality of criteria comprising:
- the position of said emitter kart and/or of said neighbouring kart on said track, so as to avoid in particular a change in power in a dangerous zone of said track;
- the position of said emitter kart and/or said neighbouring kart relative to all the nearby karts;
- the orientation, speed and/or acceleration of said emitter kart and/or said neighbouring kart relative to said track;
- the orientation, speed and/or acceleration of said emitter kart and/or said neighbouring kart relative to all the nearby karts;
- information on the possibility of activating said request, according to a set of rules for loading an availability counter.

10. The system according to claim 9, wherein the analysis means also take into account orientation, speed and/or reference acceleration, pre-recorded by said server.

11. The system according to claim 1, wherein said requests comprise at least requests for a temporary increase in the power of said kart and requests for a temporary reduction of the power of another kart.

12. The system according to claim 11, wherein said requests for a temporary reduction of the power of a kart neighbouring the emitter kart correspond to the sending of a fictitious missile by the emitter kart, the sending and/or impact of which are illustrated by said means for generating special effects.

13. The system according to claim 12, wherein said server applies said impact to the kart preceding the closest emitter kart.

14. The system according to claim 12, wherein said server determines a trajectory of said fictitious missile depending on the position and orientation of said emitter kart and the existence or not of an impact on a kart preceding said emitter kart, depending on the position, orientation, speed and/or distance of said previous kart.

15. The system according to claim 14, wherein said emitter kart comprises means for modifying the attitude of a missile strike, relative to the orientation of said emitter kart.

16. The system according to claim 15, wherein said emitter kart is a two-seater kart, carrying a driver and a passenger, said means for modifying the attitude of a missile strike being manipulated by said passenger.

17. The system according to claim 12, wherein said impact varies in intensity according to a number of successive requests generated by said emitter kart within a predetermined period of time.

18. The system according to claim 1, wherein the driver of at least one of said karts is equipped with virtual reality means, supplied via said second gaming information management network.

19. The system according to claim 18, wherein said virtual reality means comprise means for locating the corresponding kart, cooperating with means for transmitting said location information via said second gaming information management network.

20. The system according to claim 1, wherein said server comprises means for constructing a virtual image of said track, and means for transmitting said virtual image to at least one screen intended for spectators or players.

21. The system according to claim 1, wherein said server comprises interactivity means, allowing a spectator to emit requests able to act on at least one of said karts.

22. A method for managing a system according to any one of claims 1 to 21, comprising the following steps in a management server:
- determining the position of each of said karts;
- emitting commands acting on the control of the motorisation of at least one kart via said first safety information management network implementing a secure radio protocol;
- receiving requests for action from one of said karts, including at least requests for a temporary increase in the power of said kart and requests for a temporary reduction of the power of another kart;
- analysing said requests according to said respective positions, so as to validate, refuse, modify and/or delay the activation of said requests;
- emitting commands corresponding to said activation which is validated, refused, modified and/or delayed to the concerned karts, via said first network;
- generating image data at least to the concerned karts, illustrating the activation of said requests;
- emitting said image data via said second network, to display said images on said screen of said concerned karts.

23. A server for controlling a plurality of karts distributed on a karting track, powered by locating means carried by each of said karts and comprising:
- communication means allowing the server to communicate with each of said karts using at least two separate communication networks, a first safety information management network, allowing to transmit commands acting on the control of the motorisation of at least one kart according to a first secure radio protocol, and a second gaming information management network, allowing to transmit image data to a screen mounted on each of said karts according to a second protocol,
- means for managing the respective positions of each of the karts, provided by said locating means, and means for analysing action requests emitted by said karts, comprising at least requests for increasing and/or reducing power, according to said respective positions, capable of validating, refusing, modifying and/or delaying the activation of said requests, by emitting corresponding commands to the concerned karts, via said first network, and synchronisation means controlling according to said action requests; and
- means for generating image data at least to said concerned karts, illustrating the activation of said action requests, via said second network.
